# EUROPÄISCHE PATENTANMELDUNG

(11) **EP 2 554 802 A2**
(43) Veröffentlichungstag der Anmeldung: **06.02.2013**
(21) Anmeldenummer: 12405075.8
(22) Anmeldetag: 30.07.2012
(51) Int. Cl.: F01D 25/30

(54) **Drehverbindung auf Gleitlagerbasis**

(30) Priorität: 04.08.2011 CH 12952011
(71) Anmelder: Gehring, Rudolf, 9315 Neukirch (CH)
(72) Erfinder: Gehring, Rudolf, 9315 Neukirch (CH)

(57) **Zusammenfassung**

Ein Drehverbindungslager in Leichtbauweise auf Gleitlagerbasis weist die Funktionseinheiten Aussenring (1), Innenring (3) und Gleitelemente (2) auf. Der Aussenring (1) und / oder der Innenring (3) weisen eine kastenförmige Struktur auf. Erfindungsgemäss wird die Kastenstruktur gebildet durch mindestens einen dünnwandigen, in Umfangsrichtung geschlossenen Ring und Stützhülsen (4. 6), deren Mittenabstand mindestens 0.5 Mal und maximal 5 Mal der axialen Bauhöhe des Lagers entspricht. Die Stützhülsen (4, 6) dienen gleichzeitig als Distanzhülsen für die zu ihnen koaxialen Befestigungsschrauben (5, 7), welche dadurch eine genügende Dehnlänge für ihre Losdrehsicherung erhalten. Dank dieser Konstruktionsart erhält die Drehverbindung eine optimale Kombination von hoher Festigkeit und geringem Gewicht und kann kostengünstig hergestellt werden. Der Aussenring der Drehverbindung wird durch Schrauben zusammengefügt. Dadurch sind eine Demontage dieses Ringes und ein einfacher Austausch der Gleitelemente möglich.

## Beschreibung

### Technisches Gebiet der Erfindung

Die Erfindung betrifft eine Drehverbindung in Leichtbauweise mit den Funktionseinheiten Aussenring, Innenring und Gleitelementen als Lagerkörper, mit einem Aussenring und /oder Innenring mit kastenförmigem Querschnitt.

### Stand der Technik

Drehverbindungen werden meist als Wälzlager mit Kugeln ausgeführt, deren Ringe mit rechteckigem oder winkelförmigem Querschnitt aus massivem Stahl bestehen. Wesentliche Nachteile dieser Drehverbindungen mit massiven Stahlringen sind ihr hohes Gewicht und ihre Anfälligkeit auf Riffelbildung bei kleinen Schwenkbewegungen.

In der CH 691 191 des Anmelders wird eine Drehverbindung auf Gleitlagerbasis beschrieben, bei der mindestens einer der Ringe aus Stahlblech besteht, welches spanlos umgeformt wurde und welches als Lagerkörper mehrere Gleitelemente enthält. Der Innenring weist dabei zwei konische oder konusähnliche Flächen auf, welche als Laufbahnen für die Gleitelemente dienen, wobei die eine Konusfläche primär axiale Druck-, die andere axiale Zugbelastungen aufnimmt und beide zusammen radiale Belastungen und Kippmomente. Die Gleitelemente erstrecken sich praktisch über den ganzen Umfang. Durch diese Gestaltung erzielt man im Verhältnis zum Gewicht eine beachtliche Tragfähigkeit und dank der tiefen Flächenpressung wird die Wahrscheinlichkeit der Riffelbildung praktisch eliminiert. Aus der US 1,300,450 ist ein Kugellager bekannt, dessen Lagerringe aus ringförmigen Metallscheiben so umgeformt wurden, dass sie für die Kugeln des Lagers eine Lauffläche bilden.

Das deutsche Gebrauchsmuster DE 20 2010 008 787 U1 beschreibt ein Wälzlager für eine Welle, bei der die Laufringe mit einem Passsitz auf der Welle befestigt werden, so dass grössere Masstoleranzen von Welle und innerer Laufring möglich sind. Dabei wird dem inneren Laufring im axialen Schnitt ein Wellenprofil eingepresst.

Die FR 2.135.903 beschreibt ein Lager, dessen Lagerringe aus Blech sind und einen kastenförmigen Querschnitt für entsprechende Hohlrräume aufspannen.

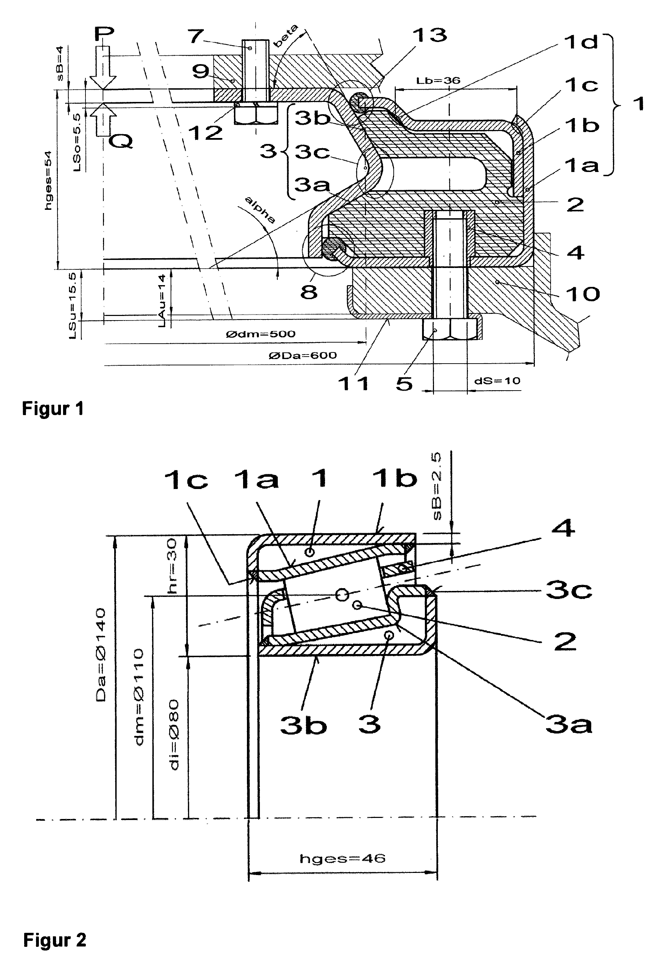

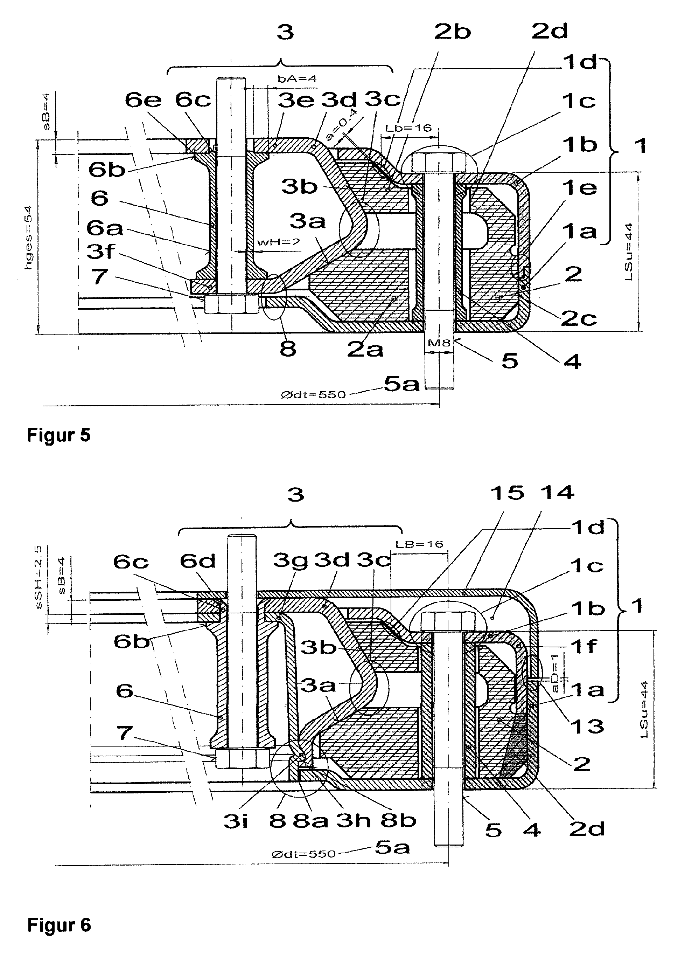

Solche bekannten Lagerkörper ermöglichen die reibungsarme RelativDrehbewegung zwischen Aussen- und Innenring. Als Drehverbindung werden Lager bezeichnet, welche radiale und axiale Kräfte sowie Kippmomente aufnehmen können. Sie unterscheiden sich vor allem dadurch von üblichen Lagerbauformen wie Kugellagern, dass sie einen grossen Lagerdurchmesser und im Vergleich dazu einen kleinen Lagerquerschnitt aufweisen. Typische mittlere Lagerdurchmesser "dm" der Drehverbindungen liegen zwischen 400 und 1200 mm und die axiale Bauhöhe "hges" beträgt bei üblichen Bauformen rund 50 mm. Das typische Verhältnis von mittlerem Lagerdurchmesser "dm" zu Bauhöhe "hges" beträgt damit rund 16. Entsprechend bezeichnete Merkmale sind als Masse in den Figuren der Beschreibung hinterlegt, sie sind beispielsweise in der Fig. 1 für bekannte Drehverbindungen und in Fig. 5 für Ausführungsbeispiele gemäss der Erfindung eingetragen.

Ein weiteres typisches Merkmal von Drehverbindungen ist der konstante Lagerquerschnitt über eine ganze Durchmesserreihe. In der Terminologie der handelsüblichen Wälzlager handelt es sich bei den Drehverbindungen aufgrund dieser zwei Merkmale generell um sogenannte Dünnringlager. Die Hauptbauform der Drehverbindungen weist zudem in den Ringen axiale Bohrungen auf, welche eine einfache und preisgünstige Befestigung an der Anschlusskonstruktion ermöglichen. Üblich ist im Weiteren, dass die Drehverbindungen integrierte Abdichtungen aufweisen.

Ausgehend von diesem Stand der Technik liegt der Erfindung die Aufgabe zugrunde, die langjährig bekannten Lager zu verbessern. So weist in der Regel die Drehverbindung gemäss Fig. 1 eine Blechdicke "sB" des Innenringes von 4mm auf. Das Verhältnis zwischen mittlerem Durchmesser "dm" und Wandstärke "sB" beträgt hier 125. Diese Ausführung weist vor allem bei höheren Belastungen drei beachtliche Nachteile auf: Die Gestaltung der Ringe erlaubt es nicht, die hohe Tragfähigkeit der Gleitelemente auszunützen, die geringe Länge der Befestigungsschrauben erfordert aufwendige Sicherungsmassnahmen gegen das Lösen der Schrauben und die unlösbar miteinander verbundenen Elemente der Baugruppe verhindern einen Austausch der Gleitelemente, soweit die Merkmale aus der Fig. 1 den Merkmalen aus der CH 691 191 entsprechen.

Fig. 1 zeigt aber weitergehende Merkmale. Berechnungen mittels der Finite-Elemente-Methode (FEM) haben gezeigt, dass bei aufliegender Last, das heisst bei Belastung in Richtung des Pfeiles (P) in Fig. 1 vor allem im Bereich 3c des Innenringes 3 hohe Spannungen auftreten. Ebenso treten bei hängender Last, das heisst bei Belastung in Richtung des Pfeiles (Q) in Fig. 1, die hohen Spannungen im Bereich 1c des Aussenringes 1 in Fig. 1 auf. Drehverbindungen werden üblicherweise mit Schrauben 7 am Flansch 9 des aufliegenden Anlageteils und mit Schrauben 5 am Flansch 10 des tragenden Anlageteils befestigt.

Weil Leichtbaudrehverbinungen konsequenterweise in Anlagen eingesetzt werden, die ihrerseits den Leichtbaukriterien entsprechen, sind die Flansche 9 und 10 meist ebenfalls dünn. Im gezeigten Ausführungsbeispiel in Fig. 1 beträgt die Flanschdicke (LAu) 14mm bei einem Durchmesser "dS" der Schraube 5 von 10mm. Die Länge der Schraube 5 ist deshalb zu gering, um ein Losdrehen dieser Schraube 5 durch die Schraubenvorspannung zu verhindern. Um das Lösen der Schrauben 5 und 7 zu verhindern, werden deshalb zusätzliche Sicherungselemente verwendet. In der Fig. 1 sind dazu als Beispiel Sicherungsringe 12 für die Schrauben 7 und Sicherungsbleche 11 für die Schrauben 5 gezeichnet. Während die Sicherungsringe 7 für viele Anwendungsfälle, vor allem im Bahnbereich, als nicht sicher genug gelten, sind die im Bahnbereich häufigen Sicherungsbleche 11 in der Montage sehr zeitaufwendig. Bei Gleitdrehverbindungen sind üblicherweise die Metallringe so behandelt, dass sie bei zweckentsprechender Beanspruchung verschleissfrei sind. Die Gleitelemente haben bei hoher Belastung jedoch eine durch den Verschleiss begrenzte limitierte Lebensdauer. Bei der hier beschriebenen Ausführung ist es aber nicht möglich, den Zustand der Gleitelemente ohne Zerstörung von anderen Lagerteilen zu kontrollieren und sie allenfalls auszutauschen.

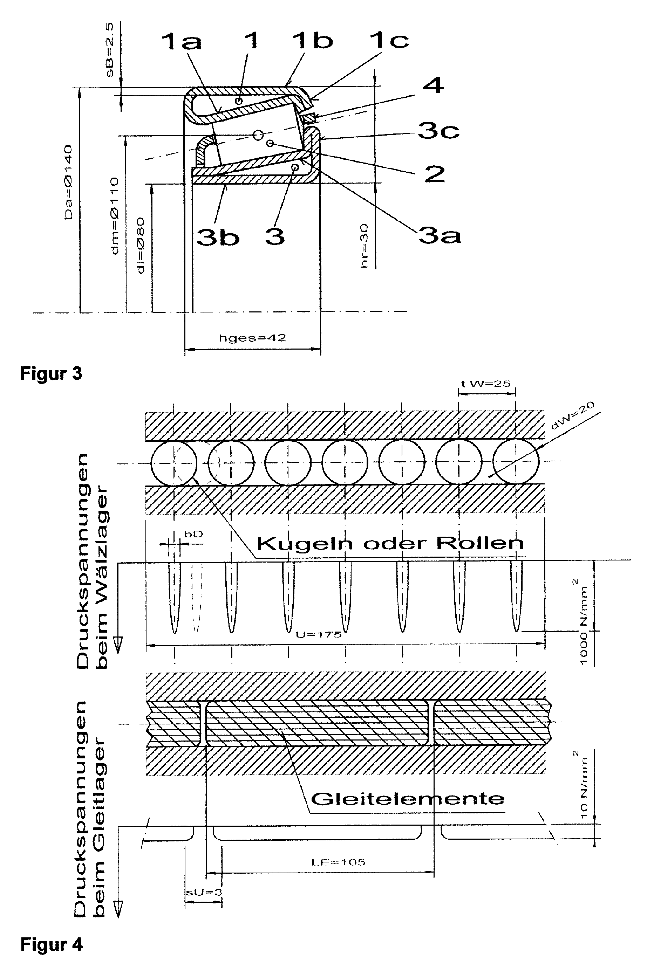

Bei Wälzlagern in Normalbauweise, das heisst mit Grössenverhältnissen gemäss den Fig. 2 und 3 und damit ganz andern Verhältnissen zwischen Lagerdurchmesser und Lagerquerschnitt als bei Drehverbindungen und mit Ringen ohne Befestigungslöchern wurden schon Bauweisen vorgeschlagen, bei denen der Aussenring und der Innenring ebenfalls aus umgeformtem Blech bestehen und bei welchen diese Ringe in Kastenbauweise als Hohlkörper ausgebildet sind. Eine solche Ausführung ist zum Beispiel in der Offenlegungsschrift DE 10 2005 019 482 A1 beschrieben und in Fig. 2 prinzipiell dargestellt. Bei dieser Ausführungsform sind die Ringteile 1a und 1b sowie 3a und 3b jeweils durch umlaufende Schweissnähte 1c respektive 3c miteinander verbunden. Das typische Verhältnis von mittlerem Lagerdurchmesser "dm" zu Bauhöhe "hges" beträgt hier rund 2.5. Das Verhältnis zwischen mittlerem Durchmesser "dm" und Wandstärke "sB" beträgt 44. Weitere Details sind in der Beschreibung der Fig. 2 zu finden. Bezogen auf den mittleren Lagerdurchmesser sind die Wandstärken der Blechringe fast 3 mal so dick wie bei der Drehverbindungslager nach Fig. 1. Die Wälzlager mit hohlen Ringen weisen über den ganzen Umfang einen konstanten Querschnitt auf und die Einzelteile der Ringe sind über den ganzen Umfang unlöslich miteinander verbunden.

Eine andere Ausführungsform eines Wälzlagers in Normalbauweise wird in der Patentschrift 2.135.903 und prinzipiell in Fig. 3 gezeigt. Aussenring 1 und Innenring 3 sind hierbei aus je einem einzigen Blechteil geformt. Damit wird vermieden, dass für jeden Lagerring zwei Teilringe miteinander verbunden werden müssen. Bei dieser Ausführungsform ist deshalb vorgeschlagen, dass die beiden Enden der Ringe nicht verschweisst sind, sondern sich nur aufeinander abstützen. Dafür ist die Umformung zum geschlossenen Körper sehr aufwendig und die fertigungstechnischen Anforderungen nehmen mit steigender Lagergrösse überproportional zu. Die Ausführungsformen der Wälzlager mit Kastenquerschnitt in Normalbauweise lassen sich nicht wirtschaftlich bei Drehverbindungen anwenden, vor allem aber müssten bei den speziellen Verhältnissen der Drehverbindungen unverhältnismässig aufwendige technische Prozesse durchgeführt werden. Schweissnähte zur Verbindung der einzelnen Komponenten wären bei den Abmessungen der Drehverbindungen einesteils extrem teuer und würden gleichzeitig wegen der im Verhältnis zum Durchmesser sehr geringen Wandstärken zu Verformungen führen, die nur durch kostspielige Methoden vermieden oder rückgängig gemacht werden könnten. Eine Konstruktion, bei der die Enden wie beim Kegelrollenlager gemäss Fig. 3 nur bei der Herstellung aneinandergefügt werden, würde bei den vorgängig beschriebenen dimensionellen Merkmalen der Drehverbindung nur eine geringe und damit unwirtschaftliche Verbesserung der Tragfähigkeit bringen.

### Darstellung der Erfindung

Die erfindungsgemässe Drehverbindung hat deshalb zum Zweck, die Nachteile der bekannten Drehverbindung auf Gleitlagerbasis zu beseitigen, also insbesondere die Tragfähigkeit der Bauweise nach CH 691 191 bei annähernd gleichem, tiefem Gewicht und geringen Herstellkosten wesentlich zu erhöhen, eine Befestigungsart bereitzustellen, welche ein Lösen der Schrauben 5 und 7 ohne zusätzliche Sicherungselemente 11 oder 12 sicher verhindert und so gestaltet ist, dass sich der Aussenring zum Austausch der Gleitelemente zerlegen lässt.

Dies wird erfindungsgemäss dadurch erreicht, dass mindestens einer der Ringe eine Kastenstruktur aufweist, welche durch mindestens einen in Umfangsrichtung geschlossenen Ring 1, 3 und zahlreiche auf den Umfang verteilte Stützhülsen 4, 6 gebildet wird, welche als Distanzhülsen für die Befestigungsschrauben dienen.

Durch diese Stützhülsen wird die Länge der Schrauben 5 und 7 so vergrössert, dass sie als Dehnschrauben allein durch die Vorspannkraft gegen Losdrehen gesichert sind. Der Aussenring 1 besteht aus dem unteren Aussenringteil 1a und dem oberen Aussenringteil 1b. Diese umhüllen die Gleitelemente 2 und sind durch die Schrauben 5 miteinander verbunden. Beim Lösen der Schrauben 5 können der Aussenring 1 zerlegt und die Gleitelemente 2 ausgetauscht werden.

Die Kastenstruktur aus unterschiedlichen Elementen erlaubt es, die einzelnen Elemente aus verschiedenen Werkstoffen herzustellen, sodass mehrere Anforderungen optimal erfüllt werden. Diese Vorteile werden bei den einzelnen Ausführungsformen genauer beschrieben.

Ein Drehverbindungslager in Leichtbauweise auf Gleitlagerbasis weist also die Funktionseinheiten Aussenring, Innenring und Gleitelemente auf. Der Aussenring und / oder der Innenring weisen eine kastenförmige Struktur auf. Erfindungsgemäss wird die Kastenstruktur gebildet durch mindestens einen dünnwandigen, in Umfangsrichtung geschlossenen Ring und Stützhülsen, deren Mittenabstand mindestens 0.5 Mal und maximal 5 Mal der axialen Bauhöhe des Lagers entspricht. Die Stützhülsen dienen gleichzeitig als Distanzhülsen für die zu ihnen koaxialen Befestigungsschrauben, welche dadurch eine genügende Dehnlänge für ihre Losdrehsicherung erhalten. Dank dieser Konstruktionsart erhält die Drehverbindung eine optimale Kombination von hoher Festigkeit und geringem Gewicht und kann kostengünstig hergestellt werden. Der Aussenring der Drehverbindung wird durch Schrauben zusammengefügt. Dadurch sind eine Demontage dieses Ringes und ein einfacher Austausch der Gleitelemente möglich. Die Verbindung der einzelnen Ringe— durch Stutzhülsen ermöglicht es, für die einzelnen Ringteile verschiedene und auch nicht schweissbare Werkstoffe einzusetzen. So können zum Beispiel nur diejenigen Teile aus rostfreiem Material hergestellt werden, welche besonderen Korrosionseinflüssen ausgesetzt sind, die ändern aus hochfesten oder preisgünstigen Werkstoffen. Bei einer Ausführungsform wird zudem durch die Gestaltung von Aussenring und Innenring eine reibungsfreie Labyrinthdichtung erzielt. Die erfindungsgemässe Drehverbindung weist vor allem dort beachtliche Vorteile auf, wo hohe Tragfähigkeit bei geringem Gewicht gefordert wird und wo ein wartungsfreier Betrieb sowie ein einfacher Unterhalt wichtig sind. Typische Einsatzgebiete finden sich deshalb im Transport- und im Medizinalsektor.

Bei einer vorteilhaften Ausführungsform besteht der Aussenring des Drehverbindungslagers aus dem Aussenring-Unterteil, dem Aussenring-Oberteil und mindestens acht Stützhülsen.

Dabei kann die Raum-Kastenstruktur des Aussenringes durch den Aussenring-Unterteil, den Aussenring-Oberteil, den Druckbereich der Gleitelemente und mindestens acht Stützhülsen gebildet sein.

Die einzelnen Komponenten des Aussenringes können mittels Befestigungsschrauben zusammen verspannbar sein und der Aussenring kann in seine Einzelkomponenten zerlegbar sein.

Die Stützhülsen können aus einem andern Werkstoffe bestehen als die in Umfangsrichtung geschlossenen Ringe des Aussenringes und / oder des in Umfangsrichtung geschlossenen Tragringes des Innenringes.

Die in Umfangsrichtung geschlossenen Ringe des Aussenringes und die in Umfangsrichtung geschlossenen Ringe des Innenringes können aus verschiedenen Werkstoffen wie Stahl, Aluminiumlegierungen oder Messing bestehen.

Der Innenring wird aus einem Tragring oder aus einem Tragring und einem Stützring und mindestens acht Zwischenhülsen gebildet und der Tragring und der Stützring können durch den Nietbereich der Stützhülsen verbunden werden.

Der Innenring und der Aussenring können im Dichtungsbereich eine Labyrinthdichtung bilden.

Jedes Gleitlagerelement deckt einen Winkelbereich des Gesamtlagers ab, wobei jeweils mindestens zwei, drei oder vier Stützhülsen durch jedes Gleitlagerelement hindurchragen und dieses räumlich fixieren. Bei z.B. 32 Stützhülsen in einem Winkelabstand von 11,25° deckt ein Gleitelement mit 2 Stützhülsen 22,5° ab, und ein Gleitelement mit 4 Stützhülsen deckt 45° ab. Bei 36 Stützhülsen in einem Winkelabstand von 10° deckt ein Gleitelement mit 3 Stützhülsen 30° ab. Genauso kann der Fachmann andere sinnvolle Winkelabstände der Stützhülsen voneinander und geeignet grosse Gleitelemente, aber mindestens 6 mit 60 Grad Abdeckung, festlegen. Es sollten mindestens 16 Stützhülsen in einem Winkelabstand von 22,5° sein, um die Hohlraumstruktur aufzubauen, deren Steifigkeit auch durch den Abstand in Umfangrichtung der Hülsen festgelegt wird.

Die Zahl der Stützhülsen kann insbesondere zwischen 8 und 36 gewählt sein, vorzugsweise in einer einen Teiler von 360 (oder 3600) aufweisenden Grösse, wie beispielsweise 10, 12, 16, 18, 20, 24, 30, 32 und 36.

Der Aussenring kann, wie schon oben gesagt ein Aussenring-Unterteil und ein Aussenring-Oberteil aufweisen, dessen unteres freies Ende radial innenseitig zum Aussenring-Unterteil angeordnet ist und einen durch die Befestigungsschraube vermittelten Druckbereich des Gleitelementes ausbildet, das einen verspannten Abschnitt unter dem Aussenring-Oberteil aufweist.

Schliesslich kann eine Haube vorgesehen sein, die zusammen mit dem Aussenring-Oberteil und dem Aussenring-Unterteil eine Labyrinth-Dichtung bildet und die - optional - auf dem Innenring befestigt ist.

### Kurze Beschreibung der Zeichnungen

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig.1-4: zeigen den Stand der Technik aufgrund der bekannten GleitDrehverbindung gemäss Patentschrift CH 691 191, der Kegelrollenlager gemäss Offenlegungsschrift DE 10 2005 019 482 A1 und Patent 2.135.903;
- Fig. 5: zeigt eine Querschnittsansicht einer Drehverbindung auf Gleitlagerbasis gemäss einem ersten Ausführungsbeispiel der Erfindung;
- Fig. 6: zeigt eine Querschnittsansicht einer Drehverbindung auf Gleitlagerbasis gemäss einem zweiten Ausführungsbeispiel der Erfindung;
- Fig. 7A: zeigt eine Querschnittsansicht einer Drehverbindung auf Gleitlagerbasis gemäss Fig. 5 mit eingezeichneter Schnittlinie A-A; und
- Fig. 7B: zeigt eine teilweise geschnittene Teil-Draufsicht auf das Ausführungsbeispiel nach Fig. 7A entlang der durch die Linie A-A symbolisierten Ebene.

### Beschreibung bevorzugter Ausführungsformen

**Fig.** 1 zeigt eine bekannte Ausführung einer Gleitdrehverbindung. Gleiche beziehungsweise ähnliche Merkmale sind in allen Figuren mit gleichen und ähnlichen Bezugszeichen gekennzeichnet, unabhängig davon, ob das Merkmal aus dem Stand der Technik bekannt ist oder aus der Erfindung hinzugetreten ist.

Gemäss Fig. 1 ist der Innenring 3 aus Metallblech hergestellt und zum Beispiel durch Drückwalzen so umgeformt, dass er die untere konische Tragbahn 3a mit dem Winkel α und die obere konische Haltebahn 3b mit dem Winkel β zur Lagerebene erhält. Eine andere Herstellungsform benutzt als Ausgangsmaterial dünnes Rohr, welches wiederum durch spanloses Umformen seine endgültige Querschnittsform erhält.

Der Aussenring 1 ist bei dieser Variante zweiteilig ausgeführt; er besteht aus dem unteren Aussenringteil 1a und dem oberen Aussenringteil 1b. Vom Aussen- und Innenring werden die Gleitelemente 2 umschlossen. Diese bestehen üblicherweise aus Kunststoffen mit niedrigem Reibwert. Die Gleitelemente 2 aus denselben Materialien sind auch bei der Erfindung einsetzbar. Die beiden Aussenringteile 1a und 1b werden im Bereich 1c durch umbördeln unlösbar miteinander verbunden. Die gezeigte Drehverbindung hat einen mittleren Durchmesser "dm" von 500 mm, eine axiale Gesamthöhe "hges" von 54 mm und weist 16 Gleitelemente 2 auf. Letztere werden durch die 32 Gewindeeinsätze 4 gegen verdrehen gesichert. Die Gewindeeinsätze dienen gleichzeitig dazu, die Drehverbindung mit Schrauben am unteren Anschlussflansch 10 zu befestigen. Der Anschlussflansch 10 ist nicht Teil der Drehverbindung, sondern Teil einer der beiden Baugruppen, welche durch die Drehverbindung drehbar miteinander verbunden werden.

Die Drehverbindung wird durch die berührenden Dichtungen 8 und 13 abgedichtet. Diese bewirken besonders aufgrund des grossen Lagerdurchmessers ein grosses Reibmoment.

Drehverbindungen dieser Bauart werden in den meisten Fällen durch eine dominierende Axialkraft in Richtung des Pfeils P von oben auf den Innenring 3 belastet, können aber auch Abhebekräfte in Richtung des Pfeils Q nach oben aufnehmen. Man spricht deshalb auch von den Tragbahnen 3a und den Haltebahnen 3b. Sie sind üblicherweise spielfrei vorgespannt, in der gezeigten Ausführung zum Beispiel, indem der Aussenring 1 im Bereich 1d über die Gleitelemente 2 auf die obere konische Haltebahn 3b des Innenringes 3 drückt. Die freien Längen "LSu" der unteren Schrauben 5 und "LSo" der oberen Schrauben 7 sind mit 15.5 respektive 5.5 Millimetern sehr kurz. Die Schrauben 5 sind deshalb mit Sicherungsblechen 11 und die Schrauben 7 mit Sicherungsringen 12 gesichert.

Fig. 2 stellt ein Normalwälzlager mit hohlen Ringen dar. In Fig. 2 ist ein Kegelrollenlager gemäss Offenlegungsschrift DE 10 2005 019 482 A1 prinzipiell dargestellt. Dieses Wälzlager mit hohlen Ringen weist über den ganzen Umfang einen konstanten Querschnitt auf. Der innere Laufring 3a und der Wellenring 3b des Innenringes 3 sowie der äussere Laufring 1a und der Gehäusering 1b des Aussenringes 1 sind jeweils über den ganzen Umfang mit je 2 Schweissnähten 1c, 3c miteinander verbunden. Das Lager weist bei einem mittleren Durchmesser "dm" von 110 mm eine axiale Bauhöhe "hges" von 42 mm auf. Das typische Verhältnis von mittlerem Lagerdurchmesser "dm" zu Bauhöhe "hges" beträgt damit rund 2.5. Die gezeigte Ausführungsform weist eine Blechstärke von 2.5 mm auf. Das Verhältnis zwischen mittlerem Durchmesser "dm" und Wandstärke "sB" beträgt hier 44. Bezogen auf den mittleren Lagerdurchmesser sind die Wandstärken der Blechringe fast 3 Mal so dick wie bei der Drehverbindungslager nach Fig. 5.

Der äussere Laufring 1a und der innere Laufring 3a müssen bei einem Wälzlager gehärtet sein. Durch diese Forderung und die Voraussetzung, dass das Ringmaterial schweissbar sein muss ist die Materialwahl stark eingeschränkt. Wälzlager erfordern zudem eine hohe Formgenauigkeit der Laufbahnen. Eine spanabhebende Bearbeitung der Laufringe nach dem Schweissen und Härten ist damit mit grösster Wahrscheinlichkeit unvermeidlich. Eine spanabhebende Bearbeitung ist bei einer Drehverbindung auf Gleitlagerbasis aus funktionellen Gründen unerwünscht und aus Kostengründen nicht vertretbar.

**Fig.** 3 zeigt eine andere Ausführungsform eines Normalwälzlagers. Die Ausführungsform eines Wälzlagers gemäss dieser Figur entspricht der Ausführung, welche in der 2.135.903 beschrieben wird. In den Grundzügen entspricht sie der Bauform nach Fig. 1. Auch die Dimensionen und Wandstärken sind ganz ähnlich. Das spezielle Merkmal dieses Lagers sind die verstärkten Axialborde. Der Axialbord 1c des Aussenringes und der Axialbord 3c des Innenringes sind so gestaltet, dass das Blech mit der konstanten Wandstärke hier zweifach nebeneinander liegt. Dadurch können diese Lager höhere Axialkräfte aufnehmen als die Lager nach Fig. 2. Die Enden der Ringe sind nicht miteinander verschweisst, sondern stützen sich nur aufeinander ab. Die Dimensionen und Wandstärken sind bei dieser Ausführung ganz ähnlich wie bei der Variante nach Fig. 2.

Fig. 4 zeigt die Spannungsverhältnisse bei Gleit- und bei Wälzlagern. Für das Verständnis der erfindungsgemässen Ausführung einer Drehverbindung mit Innenring 3 und / oder Aussenring 1 in Kastenbauform sind die Unterschiede in der Spannungsverteilung bei Gleit- und Wälzlagern wichtig, unabhängig davon, ob diese an bestehenden oder neuen Lagern erläutert werden. Diese Verteilungen sind in den genannten Druckschriften des Standes der Technik nicht offenbart. Einfachheitshalber werden die Spannungsverhältnisse bei einem Linearlager dargestellt. Die Fig. gelten aber gleichermassen für runde Lager. Dabei entspricht die Darstellung einer Abwicklung des Schnittes durch den Kreis der Lagerelemente.

Das obere Bild in Fig. 4 zeigt die Spannungsverteilung bei Wälzlagern. Bei diesen Lagern ist die Wälzkörperteilung "t w" etwas grösser als der Wälzkörperdurchmesser "d W". Bei Drehverbindungen sind die häufigsten Wälzkörper Kugeln mit einem Durchmesser "d W" von 20 mm. Die Druckzone mit der Breite "bD" beträgt aber nur einen Bruchteil im Promillebereich der Wälzkörperteilung "t w" (Damit die Darstellung anschaulich wird, ist die Breite "bD" der Druckzone gegenüber der Grösse der Wälzkörper unmassstäblich stark vergrössert gezeichnet). Entsprechend ist die Druckspannung unter den Wälzkörpern sehr hoch. Übliche Werte liegen in der Grössenordnung von 1000 N/mm². Wälzlager erfordern deshalb Lagerringe mit hoher Festigkeit und gehärteten Laufbahnen. Bei einer Bewegung der Lager wandern die Druckzonen "bD" und bestreichen damit die ganz Länge "U" der Laufbahnen (angedeutet mit den strichlierten Linien bei Spannungsdiagramm und Kugeln). Bei Wälzlagern mit hohlen Ringen ist es deshalb wichtig, dass der Ringquerschnitt über die ganze Länge konstant ist.

Im Gegensatz dazu wird bei Gleitlagern in der erfindungsgemässen Ausführung die Kraft über praktisch die ganze Lagerlänge "U" gleichmässig übertragen. Der lastfreie Teil "sU" beträgt bei der beschriebenen Ausführung etwa 3mm bei einer Elementlänge "LE" von rund 100 mm. Die üblichen Druckspannungen bei den Gleitelementen von Gleitdrehverbindungen liegen bei etwa 10 N/mm². Zu beachten ist, dass die Massstäbe für die Spannungen in der Darstellung für Wälz- und Gleitlager unterschiedlich sind. Die Darstellung im gleichen Massstab würde die Graphiken unübersichtlich machen. Dank den tiefen Spannungen bei Gleitlagern ist es möglich, Lagerringe aus ungehärtetem Stahl oder auch aus AluminiumLegierungen zu verwenden. Die gleichmässige Lastverteilung in Verbindung mit den tiefen Spannungen bei der Gleitdrehverbindung erlauben es zudem, die Kastenstruktur des Innen- oder Aussenringes so zu gestalten, dass die geschlossene Kastenstruktur nur auf einem Teil, mindestens aber auf einem Zwölftel des Lagerumfanges vorhanden ist. Die konkrete Gestaltung der Lagerringe wird anhand der folgenden Figuren beschrieben.

Fig. 5 zeigt eine Querschnittsansicht einer ersten Ausführungsform der erfindungsgemässen Drehverbindung. Bei dieser besteht der Innenring 3 aus dem Tragring 3c und zweiunddreissig Stützhülsen 6. Der Tragring 3c weist wiederum eine Tragbahn 3a und eine Haltebahn 3b auf. Die Stützhülsen 6 sind zwischen dem oberen Flansch 3e und dem unteren Flansch 3f des Innenringes angeordnet. Beim Befestigen der Drehverbindung mittels der Schrauben 7 an der Anschlusskonstruktion bilden der Tragring 3 und die Stützhülsen 6 damit eine im Querschnitt geschlossene kastenförmige oder hohlraumähnliche Struktur hoher Steifigkeit und Festigkeit. Bei gleicher Belastung sind die Spannungen im Bereich 3c des Innenringes 3 dadurch wesentlich tiefer als bei der Bauform nach Figur 1.

Die Schrauben 5 und 7 können in die nicht gezeichneten Flansche der Anschlusskonstruktion eingeschraubt werden, wenn diese ein entsprechendes Gewinde haben; sie können auch durch in den Zeichnungen nicht dargestellte Muttern befestigt werden.

Die Stützhülsen 4 und 6 sind tailliert; im mittleren Bereich 6a ist der Aussendurchmesser zur Gewichtsreduktion möglichst klein. Er ist so gewählt, dass der Querschnitt der Stützhülse 6 demjenigen der Schraube 7 entspricht. Im Auflagebereich zum Flansch 3e des Tragringes 3 weist die Stützhülse den Flansch 6b mit einem grösseren Aussendurchmesser als im mittleren Bereich 6a auf. Damit ergibt sich eine geringe Flächenpressung im Auflagebereich zwischen Stützhülse 6 und Tragring 3. Zum Beispiel beträgt die Druckspannung in den Stützhülsen beim häufigen Einsatz von Schrauben der Qualität 8.8 etwa 550 N/mm². Für die Herstellung der Ringe mittels Metalldrücken geeignete Kaltumformstähle weisen eine Streckgrenze von maximal etwa 420 N/mm² auf. Der grosse Flanschdurchmesser bewirkt zudem eine gleichmässigere Lastverteilung in Umfangsrichtung. In Anbetracht dieser beiden Umstände ist weist diese Ausführung eine Breite "bA" der ringförmigen Auflagefläche auf, die mit 4mm etwa doppelt so gross ist wie die Wandstärke "wH" der Hülse. Die kurze Zentrierpartie 6c der Stützhülsen 6 bewirkt, dass der Innenring 3 auch im nicht eingebauten Zustand eine feste Baugruppe bildet, ohne dass ein Verschweissen oder Verkleben nötig ist. Die Stützhülsen 6 werden einfach in den Tragring 3d eingeklickt, welcher vor dem Verspannen mittels der Schrauben 7 noch leicht elastisch ist. Die Zentrierpartie 6c sind Stufen, die in den Bereich des Flansches 3e hineinragen. Anstelle der Zentrierpartie 6c der Stützhülsen 6 kann aber auch eine Ansenkung im Flansch 3e oder 3f des Tragringes 3d für die Fixierung der Stützhülsen 6 vorgesehen werden Der Aussenring 1 besteht aus dem Aussenring-Unterteil 1a, dem Aussenring-Oberteil 1b und zweiunddreissig Stützhülsen 4. Auch die Stützhülsen 4 sind üblicherweise wie die Stützhülsen 6 tailliert. Beim Befestigen der Drehverbindung auf einem Maschinenteil mittels der Schrauben 5 werden Aussenring-Unterteil 1a, Aussenring-Oberteil 1b und die Stützhülse 4 miteinander verspannt. Der Aussenring-Oberteil stützt sich im Bereich 1e auf dem Aussenring-Unterteil 1a radial und axial ab. Dadurch ergibt sich im Bereich der Stützhülsen auch hier die erwünschte Kastenstruktur oder Hohlraumstruktur im Querschnitt.

Es ist zumeist ausreichend, wenn eine der beiden Hohlraumstrukturen vorhanden sind. Die positive Wirkung des Ausführungsbeispiels der Fig. 5 mit beiden Hohlraumstrukturen kann somit auch mindestens teilweise dadurch realisiert werden, dass "entweder-oder" die Hülsen 4 oder 6 vorhanden sind.

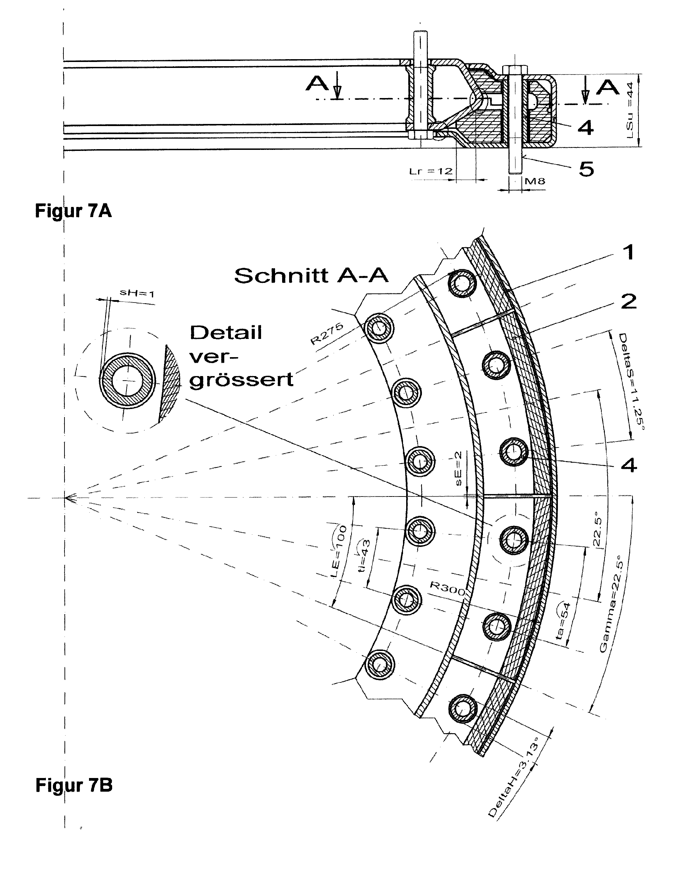

Die Partien des Aussenring-Unterteils 1a und des Aussenring-Oberteils 1b, welche direkt das geschlossene Rechteck des Kastens bilden, sind wie die Stützhülse 4 in dieser Darstellung hellgrau hinterlegt. Im dargestellten Beispiel beträgt der mittlere Lagerdurchmesser 500 mm und der Mittenabstand "ta" der Stützhülsen 4 entspricht mit 54 mm ungefähr der axialen Bauhöhe "hges" der Drehverbindung ("ta" siehe Fig. 7). Gegenüber der Ausführung nach Fig. 1 wird damit bei dieser Ausführung der Abstand (Lb) zwischen dem Kraftangriffsbereich 1d und dem Einspannbereich 1c des Aussenring-Oberteils 1b etwa um den Faktor 2 verkürzt, sodass die Haube bei gleichen Abmessungen in erster Näherung etwa um den Faktor 8 steifer wird als bei der Ausführung nach Fig. 1.

Die Verbindung des Aussenring-Unterteiles 1a mit dem Aussenring-Oberteil 1b durch die Schrauben 5 bietet gegenüber der Verbindung durch Bördeln gemäss Fig. 1 den wesentlichen Vorteil, dass die Drehverbindung demontiert werden kann. Dies erlaubt zum Beispiel den Austausch der Gleitelemente, wenn diese nach einer gewissen Laufzeit Verschleiss aufweisen. Die Bildung der Kastenstruktur durch verschiedenartige Elemente ermöglicht es, jedes Element bezüglich Werkstoff, Formgebung und Oberflächenbehandlung optimal auf sein Anforderungsprofil abzustimmen. So können zum Beispiel die Stützhülsen 4 und 6 aus Stahl mit gleicher Festigkeit und gleichem Elastizitätsmodul wie die Schrauben 5 und 7 gewählt werden, der Tragring 3d aus Kaltumformstahl mit hoher Festigkeit und guter Umformbarkeit, der Aussenring-Unterteil 1a und der Aussenring-Oberteil 1b aus rostfreiem Stahl. Es ist ebenfalls möglich, die Werkstoffe der Drehverbindung der beidseitigen Anschlusskonstruktion anzupassen. Zum Beispiel kann die Tragkonstruktion, auf welche der Aussenring 1 aufgesetzt ist, aus Stahl bestehen, der vom Innenring 3 drehbar getragene Aufbau hingegen aus Aluminium. Entsprechend kann der Aussenring 1 ebenfalls aus Stahl, der Innenring 3 hingegen aus einer Aluminium-Legierung bestehen. Dadurch werden Ausdehnungsdifferenzen zwischen der Anschlusskonstruktion und dem dazugehörigen Element der Drehverbindung vermieden. Die Ausdehnungsdifferenzen werden wie nachstehend beschrieben innerhalb der Drehverbindung aufgenommen.

Die Stützhülsen 4 sind mit dem Radialspiel "sH" im Gleitelement 2 eingesetzt. Dieses Spiel erlaubt unterschiedliche Ausdehnungen von Gleitelementen 2 und Aussenring 1. Diese Funktion ist anhand der Fig. 7 genauer beschrieben.

Der obere Schenkel 2b der Gleitelemente wird durch Federvorspannung an die Haltebahn 3b des Innenringes 3 angepresst. Auf die Details dieser Anpressung wird hier nicht eingegangen, weil sie bereits in CH 691191 beschrieben sind und somit Stand der Technik darstellen. Durch diese Anpressung ist der Lagerbereich der Gleitdrehverbindung immer spielfrei, obwohl der obere Schenkel 2b des Gleitelementes 2 zur Haltebahn 3b des Innenringes 3 einen Abstand "a" aufweist. Der Abstand "a" ermöglicht die radiale und axiale Ausdehnung der Gleitelemente 2 gegen über dem Innenring 3.

**Fig. 6** zeigt eine zweite Ausführungsform der erfindungsgemässen Drehverbindung. Sie unterscheidet sich hauptsächlich in zwei Punkten von der Ausführung gemäss Fig. 5: in Bezug auf die Gestaltung der Abdichtung und im dem Aufbau der Kastenstruktur des Aussenringes 1. Bezüglich Abdichtung ist sie so gestaltet, dass auf einfache Weise eine optimale Dichtwirkung mittels Dichtungslabyrinthen erreicht wird. Der obere Lagerspalt zwischen Aussenring-Oberteil 1b und Tragring 3a wird in bekannter Weise durch eine zusätzliche einfache Haube 15 weiträumig abgedeckt. Die Dichtwirkung wird primär durch das Labyrinth 13 gebildet. Die Labyrinthdichtung 13 wird gebildet durch den Axialspalt zwischen der aufgesetzte Haube 15 und der äusseren Mantelfläche des Aussenring-Oberteils 1b und dem Radialspalt mit der Breite "aD" zwischen der Stirnfläche der Haube 15 und derjenigen des Aussenring-Unterteils 1a. Diese beiden Spalte bilden zusammen ein im Querschnitt L-förmiges Labyrinth. In Extremfällen trotzdem eingedrungene Fremdkörper werden im Stauraum 14 zurückgehalten und gelangen so nicht in den Bereich der Haltebahn 3b. Die Haube 15 schützt gleichzeitig die Schrauben 5 vor Verschmutzung. Bei der unteren Labyrinthdichtung 8 bilden der Aussenring-Unterteil 1a, der Tragring 3d und der Stützring 3g ein Labyrinth mit dem vertikalen Dichtspalt 8a und dem horizontalen Dichtspalt 8b. Die gute Abdichtung der Drehverbindung ermöglicht in den meisten Anwendungsfällen einen wartungsfreien Betrieb.

Um dieses Dichtlabyrinth bilden zu können, weist diese Ausführung einen Innenring 3 mit je einem in Umfangsrichtung geschlossenen Tragring 3d und einen Stützring 3g auf. Diese werden oben durch die Zentrierpartie 6c und die Nietpartie 6d der Stützhülse 6, unten durch die in die Nut 3h eingewalzte Partie 3i des Stützringes 3g miteinander zu einem dünnwandigen Hohlkörper verbunden. In der oberen Verbindungspartie mit der Vernietung durch die Stützhülsen 6 wird auch hierbei die preisgünstige, dank der gleichmässigen Lastverteilung durch die Gleitelemente 2 ermöglichte Verbindung an einzelnen Punkten gewählt. Bei der unteren Verbindung zwischen der eingewalzten Partie 3i und dem Stützring 3g liegt der Schwerpunkt auf der Abdichtung. Die Wandstärke "sB" des Tragringes 3d ist mit 4 mm grösser als die Wandstärke "sSH" des Stützringes 3g von 2.5 mm. Diese Wandstärkenunterschiede bewirken eine optimale Spannungsverteilung im gesamten Innenring 3, was erlaubt, bei gegebenem Gewicht eine optimal hohe Tragfähigkeit der Drehverbindung zu erhalten.

Der zweite Hauptunterschied zur Ausführung nach Fig. 5 besteht in der Art, wie die Kastenstruktur des Aussenringes gebildet wird. Diese wird durch den Aussenring-Unterteil 1a, die Stützhülsen 4, den Aussenring-Winkelbereich 1f und den Druckbereich 2d des Gleitelementes 2 gebildet. Das Verspannen der Gleitelemente 2 zwischen Aussenring-Unterteil 1a und Aussenring-Oberteil verhindert, dass bei Drehrichtungswechsel Gleitbewegungen zwischen den Gleitelementen 2 und dem Aussenring-Unterteil 1a mit der maximalen Schwenkamplitude von "sH" (Fig. 7) möglich sind. Sie verhindern dadurch allfälligen Verschleiss der Gleitelemente 2 an diesen Flächen.

**Fig. 7** zeigt einen Querschnitt und einen Horizontalschnitt durch eine Drehverbindung gemäss Fig. 5. Hier ist die Verteilung der Gleitelemente und der Stützhülsen ersichtlich. Zwischen den einzelnen Gleitelementen ist in Umfangsrichtung das Spiel "sE" vorhanden. Dieses Umfangsspiel ermöglicht die stärkere Ausdehnung der Gleitelemente 2 gegenüber dem Innenring 3 und dem Aussenring 1. Das Spiel "sH" erlaubt die unterschiedliche Ausdehnung in radialer Richtung und in tangentialer Richtung zwischen den beiden Stützhülsen 4 im gleichen Gleitelement 2. Die Elementlänge "LE" beträgt bei dieser Drehverbindung 100 mm und ist damit rund 100 Mal grösser als das Spiel "sE" und 30 Mal grösser als die unbelastete Zone "sU" in Figur 4. Dadurch wird eine gleichmässige Lastverteilung, dank der ebenfalls grossen Kontaktbreite "Lr" von 12 mm eine sehr grosse tragende Fläche und damit eine äusserst tiefe Flächenpressung erreicht (vergleiche Fig. 4). Es sind also sechzehn Gleitelemente 2 mit Winkelabdeckungen von jeweils 22,5° vorgesehen, die jeweils durch zwei Stützhülsen 4 durchdrungen sind. Dadurch ergibt sich im Viereck erste Hülse 4, zweite Hülse 4, radiale Verbindung zur Aussenwand 1a/1e, Umfangsbereich über den Winkel DeltaS = 11,25° und radialer Weg zur ersten Hülse die genannte hohlraumartige Struktur, die im Wesentlichen von einem gleichen Gleitelement 2 ausgefüllt ist.

Anhand der Fig. 5 ist beschrieben, dass die Einzelkomponenten des Innenringes 3 und des Aussenringes 1 aus verschiedenen Werkstoffen bestehen können. Ebenso ist es möglich, die einzelnen Komponenten mit unterschiedlichen funktionellen Oberflächenschichten zu versehen. So ist es zum Beispiel zweckmässig, den Innenring 3 mit einer hochwertigen Verschleissschutzschicht zu versehen, den Aussenring aber mit einer preisgünstigen Rostschutz-Beschichtung. Generell erlaubt die Modulbauweise der erfindungsgemässen Drehverbindung ein Baukastensystem, das auf verschiedenste Anforderungen optimal abgestimmt werden kann. In den beschriebenen Ausführungsformen sind die Stützhülsen 4 und 6 Hülsen mit rundem Querschnitt. Selbstverständlich beschränkt sich das Prinzip der Erfindung nicht auf diese Form der Stützelemente.

Die anhand der Fig. 5 beschriebene automatisch Spielkompensation gibt auch die Möglichkeit, Ringe aus Materialien mit verschiedenen Ausdehnungskoeffizienten zu verwenden und zum Beispiel bei einem leichten Aufbau aus Aluminium und einem schweren Unterbau aus Stahl jeden der Ringe aus dem gleichen Material wie die damit verbundene Anschlusskonstruktion zu fertigen.

### Bezugszeichenliste

- 1: Aussenring
- 2: Gleitelemente
- 3: Innenring
- 4: Stützhülse
- 5: Schraube
- 6: Stützhülse
- 7: Schraube
- 8: (Labrinth-)Dichtung
- 9: Flansch
- 10: Flansch
- 11: Sicherungsblech
- 12: Sicherungsring
- 13: (Labyrinth-)Dichtung
- 14: Stauraum
- 15: Haube

## Patentansprüche

1. Drehverbindungslager in Leichtbauweise mit einem Aussenring (1), mit einem Innenring (3) und zwischen diesen angeordneten Gleitelementen (2) als Lagerkörper, wobei mindestens einer der Ringe (1, 3) einen Raum aufspannt, vorzugsweise einen Ring (1, 3) in Kastenbauweise, **dadurch gekennzeichnet, dass** die Raumstruktur des Aussen- (1) und/oder des Innenringes (3) mindestens aus einem in Umfangsrichtung geschlossenen, aus flächigen Elementen bestehenden Ring (1 oder 3) und entlang dem Umfang verteilten und den Raum zwischen den gegenüberliegenden flächigen Elementen überbrückenden Stützelementen (4, 6) gebildet wird, und dass der Mittenabstand der Stützelemente (4, 6) bezüglich benachbarter Stützelemente (4, 6) zwischen 0.5 mal und 5 mal der axialen Bauhöhe des Lagers entspricht.

2. Drehverbindungslager nach Anspruch 1, **dadurch gekennzeichnet, dass** die Stützelemente (4, 6) Hülsen sind, die gleichzeitig als Distanzhülsen für Befestigungsschrauben (5, 7) dienen und dass die Befestigungsschrauben durch diese Stützhülsen führen.

3. Drehverbindungslager nach Anspruch 1 oder 2, **dadurch gekennzeichnet, dass** der Aussenring (1) aus dem Aussenring-Unterteil (1a), dem Aussenring-Oberteil (1b), und mindestens acht Stützhülsen (4) gebildet wird

4. Drehverbindungslager nach Anspruch 1 oder 2, **dadurch gekennzeichnet, dass** die Raum-Kastenstruktur des Aussenringes (1) durch den Aussenring-Unterteil (1a), den Aussenring-Oberteil (1b), den Druckbereich (2a) der Gleitelemente (2) und mindestens acht Stützhülsen (4) gebildet wird.

5. Drehverbindungslager nach einem der Ansprüche 1 bis 4, **dadurch gekennzeichnet, dass** die einzelnen Komponenten des Aussenringes (1) mittels der Befestigungsschrauben (5) zusammen verspannbar sind und dass der Aussenring (1) in seine Einzelkomponenten (1a, 1b, 2 und 4) zerlegbar ist.

6. Drehverbindungslager nach einem der Ansprüche 1 bis 5, **dadurch gekennzeichnet, dass** die Stützhülsen (6) aus einem andern Werkstoffe bestehen als die in Umfangsrichtung geschlossenen Ringe (1a und 1b) des Aussenringes (1) und / oder des in Umfangsrichtung geschlossenen Tragringes (3d) des Innenringes (3)

7. Drehverbindungslager nach einem der Ansprüche 1 bis 6, **dadurch gekennzeichnet, dass** die in Umfangsrichtung geschlossenen Ringe (1a und 1b) des Aussenringes (1) und die in Umfangsrichtung geschlossenen Ringe (3d, 3g) des Innenringes (3) aus verschiedenen Werkstoffen bestehen.

8. Drehverbindungslager nach einem der Ansprüche 1 oder 2, **dadurch gekennzeichnet, dass** der Innenring (3) aus dem Tragring (3d), dem Stützring (3g), und mindestens acht Zwischenhülsen (6) gebildet wird und dass der Tragring (3d) und der Stützring (3g) durch den Nietbereich (6d) der Stützhülsen (6) verbunden werden.

9. Drehverbindungslager nach einem der Ansprüche 1 bis 8, **dadurch gekennzeichnet, dass** der Innenring (3) und der Aussenring (1) im Dichtungsbereich (8) eine Labyrinthdichtung bilden.

10. Drehverbindungslager nach einem der Ansprüche 1 bis 9, **dadurch gekennzeichnet, dass** jedes Gleitlagerelement (2) einen Winkelbereich des Gesamtlagers abdeckt, dass jeweils mindestens zwei, drei oder vier Stützhülsen (4) durch jedes Gleitlagerelement (2) hindurchragen und dieses räumlich fixieren.

11. Drehverbindungslager nach einem der Ansprüche 1 bis 10, **dadurch gekennzeichnet, dass** der Aussenring (1) ein Aussenring-Unterteil (1a) und ein Aussenring-Oberteil (1 b) aufweist, dessen unteres freies Ende radial innenseitig zum Aussenring-Unterteil (1a) angeordnet ist und einen durch die Schraube (5) vermittelten Druckbereich (2d) des Gleitelementes (2) ausbildet, das einen verspannten Abschnitt unter dem. Aussenring-Oberteil (1 b) aufweist.
